# EUROPÄISCHE PATENTSCHRIFT

(11) **EP 0 323 650 B1**
(45) Veröffentlichungstag und Bekanntmachung des Hinweises auf die Patenterteilung: **26.05.1993**
(21) Anmeldenummer: 88121927.3
(22) Anmeldetag: 31.12.1988
(51) Int. Cl.: C08F 255/02, C08F 287/00, C09J 123/04

(54) **Verfahren zur Pfropfung von Polyolefinmischungen und Verwendung der Pfropfcopolymermischung als Haftvermittler und zur Herstellung von Ionomeren**
Process for grafting polyolefin mixtures and use of graft polymer mixtures as coupling agents and in the preparation of ionomers
Procédé de greffage de mélanges de polyoléfines et utilisation des mélanges de polymères greffés comme produits adhésifs et dans la préparation d'ionomères

(30) Priorität: 08.01.1988 DE 3800307
(43) Veröffentlichungstag der Anmeldung: 12.07.1989
(73) Patentinhaber: BASF Aktiengesellschaft, 67063 Ludwigshafen (DE)
(72) Erfinder: Hasenbein, Norbert, Dr., D-6716 Dirmstein (DE); Schweier, Guenther,Dr., D-6701 Friedelsheim (DE); Gropper, Hans, Dr., D-6700 Ludwigshafen (DE); Werner, Rainer Alexander, Dr., D-6702 Bad Duerkheim (DE)

(56) Entgegenhaltungen:
- EP-A- 0 268 294
- US-A- 3 873 643
- US-A- 4 477 532

## Beschreibung

Die Erfindung betrifft ein Verfahren zur Pfropfung von ethylenisch ungesättigten Carbonsäuren und/oder Carbonsäureanhydriden auf Mischungen von Polyolefinen.

Pfropfcopolymere können dadurch hergestellt werden, daß man die Basismaterialien mit Peroxiden umsetzt oder starken mechanischen Beanspruchunen unterwirft, dadurch Radikale erzeugt und sie mit geeigneten Monomeren in Kontakt bringt. Nach dem GB-Patent 679 562 können die Radikale durch Hochgeschwindigkeitsrührer, Schütteln, Mahlen, Kneten, Ultraschallschwingungen oder Passieren von Filtern bzw. Kapillarrohren mit hohen Lineargeschwindigkeiten erzeugt werden. Dadurch erfolgt ein Abbau des Polymeren, wobei reaktive Radikale gebildet werden, an denen die Pfropfreaktion stattfinden kann. Wenn man die Pfropfreaktion mit Polyethylen als Basispolymerem und Maleinsäureanhydrid als zu pfropfendem Monomeren im Scheibenextruder durchführt, sind Vernetzungsreaktionen festzustellen (vgl. Plaste und Kautschuk 23 [3], [1976], Seiten 185 bis 187). Gemäß derselben Literaturstelle erhält man wegen des Mangels an Initiatoren überhaupt keine Reaktion, wenn man für die Umsetzung übliche Extruder verwenden will.

In üblichen Extrudern kann jedoch auch eine Pfropfung durchgeführt werden, wenn man dem Reaktionsgemisch geeignete Initiatoren wie organische Peroxide zusetzt und die Umsetzung in einer z.B. in den US-Patenten 3 862 265, 3 953 655 und 4 001 172 beschriebenen speziellen Reaktionszone durchführt. Dabei erfolgt jedoch wiederum ein Polymerabbau, und im Falle des Polyethylens als Basispolymerem besteht außerdem die Gefahr der Vernetzung.

Aus den US-Patenten 3 873 643 und 4 612 155 ist bereits ein Verfahren zur Pfropfung von ethylenisch ungesättigten Carbonsäuren oder Carbonsäureanhydriden auf Mischungen von Polyolefinen bekannt. Bei diesen bekannten Verfahren werden modifizierte Polyolefine mit verbesserter Verträglichkeit zu Füllstoffen und mit guten Haftfestigkeitseigenschaften, z.B. gegenüber Aluminium erhalten. Die Haftfestigkeitseigenschaften sind aber zum Verbinden verschiedenartiger Substrate, insbesondere bei Verbunden aus Polyethylen/Haftvermittler/Stahl noch ungenügend. In den US-Patenten 4 472 555 und 4 477 532 sind modifizierte Polyolefinklebstoffmischungen und damit hergestellte Verbundwerkstoffe speziell für Polypropylen beschrieben. Die bekannten Klebstoffmischungen werden erhalten, indem man eine ethylenisch ungesättigte Carbonsäure zunächst bei hoher Temperatur auf Polyethylen hoher Dichte aufpfropft und dann mit einem Polyolefin, z.B. im erhitzten Extruder mischt. Nachteilig bei diesem Verfahren ist die Tatsache, daß das eingesetzte Material thermisch häufig belastet worden ist, wobei Abbauprodukte entstehen können.

Ein besonders elegantes, das Polymerbasismaterial schonendes Verfahren zur Herstellung von Pfropfcopolymeren ist in der europäischen Patentanmeldung 87117074.2 vorgeschlagen. Gemäß dem Verfahren der europäischen Patentanmeldung 87117074.2 werden keine Peroxide eingesetzt, und trotzdem ist die Pfropfausbeute bei niedrigen Konzentrationen an zu pfropfendem Monomer sehr hoch. Wird z.B. Maleinsäureanhydrid als Pfropfmonomer in einer Konzentration von 0,25 Gew.% bezogen auf das Basispolymer eingesetzt, ist die Pfropfausbeute nahezu quantitativ. Dies ist nicht nur aus wirtschaftlichen, sondern bei einem so toxischen Monomer wie Maleinsäureanhydrid vor allem aus arbeitshygienischen Gründen ein großer Vorteil. Die erhaltenen Pfropfcopolymeren können als Haftvermittler für Eisen-Polyethylen-Verbunde eingesetzt werden. Obwohl die Schälfestigkeiten solcher Eisen-Haftvermittler-Polyethylen-Verbundplatten bei Anwendungstemperaturen um 25°C recht hoch sind, reichen sie jedoch bei besonderen Beanspruchungen, vor allem bei erhöhten Anwendungstemperaturen, nicht immer aus.

Somit bestand die Aufgabe, ein Verfahren für die Pfropfung von ungesättigen Carbonsäuren und/oder Anhydriden zu finden, nach welchem die erhaltenen Pfropfprodukte eine besonders hohe Haftfestigkeit sowohl gegenüber polaren als auch gegenüber unpolaren Substraten besitzen. Gleichzeitig sollte weder ein Abbau noch eine Vernetzung des oder der Basispolymeren stattfinden und der Monomerenumsatz möglichst vollständig sein.

Die Aufgabe wurde durch Verfahren gemäß Patentanspruch 1 gelöst, bei dem auf eine Polyolefin mischung aus 51 bis 95 Gew.-Teilen eines Homo- bzw. Copoloymeren des Ethylens und 5 bis 49 Gew.-Teilen eines Ethylen-Propylen-Blockcopolymeren ethylenisch ungesättigte Carbonsäuren und/oder Carbonsäureanhydride gepfropft werden.

Als ethylenisch ungesättigte Carbonsäuren und/oder deren Derivate kommen insbesondere die üblichen Verbindungen wie Maleinsäure, Fumarsäure, Itaconsäure, Acrylsäure, Acrylsäureanhydrid, Methacrylsäure, Crotonsäure, Maleinsäureanhydrid, Itaconsäureanhydrid, in Betracht. Bevorzugte Verbindungen sind Maleinsäure, Fumarsäure und insbesondere Maleinsäureanhydrid.

Unter Homo- bzw. Copolymeren (A) des Ethylens werden insbesondere Polyethylene hoher Dichte (HDPE), mittlerer Dichte (MDPE), Polyethylen niederer Dichte mit linearer Struktur (LLDPE) oder sehr niedriger Dichte (VLDPE) verstanden. Es eignen sich aber auch Produkte, die nach dem Hochdruckprozeß erhalten werden, insbesondere Polyethylen niedriger Dichte (LDPE), Ethylen-Vinylacetat-Copolymerisate und Ethylen-Acrylsäureester-Copolymerisate. Bevorzugt sind aber Polyethylene mit Dichten größer oder gleich 0,930 g/cm³. Die Dichten wurden nach DIN 53 479 bestimmt.

Die eingesetzten Ethylen-Propylen-Blockcopolymeren haben einen Ethylenanteil kleiner oder gleich 20 Gew.% und einen Propylenanteil größer oder gleich 80 Gew.%. Die Ethylen-Propylen-Blockcopolymeren (B) werden nach einem in der EP-A-131 268 beschriebenen Verfahren hergestellt. Dabei sind Ethylen-Propylen-Blockcopolymere mit einem Elastomeranteil von mehr als 35 Gew.% ganz besonders bevorzugt, wobei der Elastomeranteil als Xylolextrakt bei 80°C bestimmt ist.

Nach erfindungsgemäßen Verfahren werden die zu pfropfenden Monomeren im Konzentrationsbereich von 0,01 bis 0,5 Gew.%, bezogen auf die Polymermischung, eingesetzt, der bei Temperaturen von mindestens 140°C aufgeschmolzenen Polymermischungen zugemischt, und die Pfropfreaktion wird im Temperaturbereich von 210 bis 300°C, z.B. in üblichen Extrudern bei Drücken von 1 bis 500 bar, in Abwesenheit eines radikalisch zerfallenden Initiators durchgeführt.

Bevorzugt wird im Konzentrationsbereich von 0,05 bis 0,5, insbesondere 0,1 bis 0,25 Gew.%, gepfropft. Bevorzugt beträgt der Temperaturbereich 220 bis 280°C, insbesondere 240 bis 280°C.

Bevorzugt ist auch ein Verfahren, bei dem das zu pfropfende Monomere im flüssigen Zustand zugemischt wird. Bevorzugt sind alle Verfahren, bei denen die Pfropfung peroxidfrei erfolgt, d.h. in Abwesenheit eines radikalisch zerfallenden Katalysators durchgeführt wird. Es können aber auch geringe Mengen von 0,01 bis 0,1 Gew.%. bezogen auf die Polymermischung, eines organischen Peroxids bei der Pfropfreaktion anwesend sein.

Die Pfropfung der ungesättigten Carbonsäuren, und/oder deren Anhydride wurde auf einem handelsüblichen Zweischneckenextruder, etwa ZSK 57 der Firma Werner & Pfleiderer, durchgeführt. Es können aber auch andere nach dem Stand der Technik bekannte Reaktoren, z.B. Brabender, eingesetzt werden. Die Polymermischung und erforderlichenfalls auch das zu pfropfende Monomere wurden auf mindestens 140°C aufgeschmolzen, innig vermischt und dann bei erhöhter Temperatur, 210 bis 300°C, vorzugsweise 220 bis 280°C, noch mehr bevorzugt 240 bis 280°C, umgesetzt. Dabei ist es unerheblich, ob das zu pfropfende Monomere vor oder nach dem Aufschmelzen der Polymermischung in den Reaktor gegeben wird. Die zu pfropfenden Monomeren wurden in einem Konzentrationsbereich von 0,01 bis 0,5, vorzugsweise 0,1 bis 0,25 Gew.%, bezogen auf das Ethylenpolymere, eingesetzt. Dabei wurde festgestellt, daß die Ausbeuten an gepfropftem Monomeren nahezu quantitativ sind und bei den Basispolymeren weder eine nennenswerte Vernetzung noch ein Abbau stattfindet.

Die Haftfestigkeit dieser unter Zusatz eines Ethylen-Propylen-Blockcopolymeren (B) hergestellten Produkte ist wesentlich höher als von Produkten, die ohne Zusatz eines Propylenpolymeren (B) hergestellt wurden. Dies ist überraschend, da andere zähmodifizierende Zusätze, wie Polyethylen sehr niedriger Dichte oder ein LDPE-Kautschuk die Haftfestigkeit sogar etwas herabsetzen. Es überrascht ferner, daß ein Ethylen-Propylen-Blockcopolymerzusatz größer als 49 Gew.-Teile und kleiner 5 Gew.-Teile die Haftung herabsetzt, während die Haftung bei Ethylen-Propylen-Blockcopolymerkonzentrationen von 5 bis 49 Gew.-Teilen drastisch erhöht wird, wobei ein Konzentrationsbereich an Ethylen-Propylen-Blockcopolymer (B) von 5 Gew.-Teilen bis 20 Gew.-Teilen, insbesondere 8 Gew.-Teilen bis 12 Gew.-Teilen, bevorzugt wird.

Bevorzugt ist ein Pfropfverfahren, bei dem die Pfropfung nach der homogenen Durchmischung der Basispolymeren erfolgt.

Obwohl die Pfropfreaktionen prinzipiell auch unter schlechten Ausbeuten an zu pfropfendem Monomeren und/oder Einsatz von Peroxiden durchgeführt werden können, werden solche Verfahren bevorzugt, die zur Pfropfung keine Peroxide benötigen und deren Umsätze an Pfropfmonomeren nahezu quantitativ sind. Die Fließfähigkeit wird bei den erfindungsgemäß hergestellten Produkten im Vergleich zum Basispolymeren kaum herabgesetzt.

Anders als die mit Peroxideinsatz hergestellten Pfropfcopolymeren lassen sich die ohne Peroxideinsatz hergestellten Produkte leicht verarbeiten. Die aus diesen Produkten hergestellten Folien sind wesentlich stippenärmer als solche Folien, die von Pfropfprodukten erhalten werden, die mit Peroxideinsatz hergestellt werden. Die aus der peroxidfreien Pfropfung erhaltenen Produkte sind zudem völlig farb- und geruchlos.

Die Verwendung von analogen Pfropfcopolymeren, die aus Ethylenpolymerisaten und aufgepfropften ungesättigten Carbonsäuren oder Carbonsäureanhydriden bestehen, zur Herstellung von Haftvermittlern und Klebstoffen ist an sich bekannt und z.B. in den Druckschriften GB-Patent 2 081 723 und US-Patent 4 487 885 beschrieben. Auch die Verwendung analoger Pfropfcopolymerer zur Herstellung von Ionomeren ist aus der Literatur so bekannt, daß sich eine weitere Erläuterung an dieser Stelle erübrigt (vgl. z.B. US-Patente 3 264 272 oder 3 437 718). Bei der Herstellung der Ionomeren werden die freien Pfropfcopolymeren mit anorganischen Basen oder Salzen zu den entsprechenden Salzen umgesetzt. Geeignet sind vor allem Alkaliverbindungen sowie Salze der Alkalimetalle, Erdalkalimetalle oder des Zinks mit organischen Säuren.

### Beispiel 1

90 Gew.-Teile MDPE (Copolymeres aus Ethylen 95,8 Gew.% und Buten 4,2 Gew.%; Schmelzindex = 4,5 g/10 min., bestimmt bei allen Versuchen nach ASTM-D-1238-65T bei einer Temperatur von 190°C und einem Auflagegewicht von 2,16 kg; Dichte = 0,930 g/cm³, bestimmt bei allen Versuchen nach DIN 53 479) wurden zusammen mit 10 Gew.-Teile ®Novolen 2800 JX (Blockcopolymeres der BASF aus 85 Gew.% Propylen und 15 Gew.% Ethylen) bei 140°C in einem Zweiwellenextruder, ZSK 57 von Werner & Pfleiderer, aufgeschmolzen. In die Schmelze wurden 0,15 Gew.-Teile Maleinsäureanhydrid flüssig eingepumpt, mit der Polymermischung vermischt und bei 220°C umgesetzt. Nicht umgesetztes Maleinsäureanhydrid wurde über eine Vakuumentgasung aus der Polymerschmelze entfernt.

Die mittlere Verweilzeit der Pfropfkomponenten im Extruder betrug 2 min., der Polymerdurchsatz 50 kg/h bei 150 Upm.

Die Ausbeute an gepfropftem Maleinsäureanhydrid betrug 99,5 Gew.%. Das gepfropfte Polymere hat eine verbesserte Haftung auf polaren Substanzen, wie z.B. Epoxidharzen oder Metallen und ist zudem völlig farb- und geruchlos.

### Beispiel 2 und Vergleichsversuch A

Unter den gleichen Bedingungen wie in Beispiel 1 wurde das Polymerbasismaterial mit Maleinsäureanhydrid gepfropft mit der Abänderung, daß das Polymerbasismaterial zu 100 Gew.-Teilen aus MDPE bestand.

Von den erhaltenen Produkten wurden 2,7 mm starke Eisen/Haftvermittler/Polyethylen-Verbundplatten gepreßt und die Schälfestigkeiten nach einem Test in Anlehnung an DIN 30 670 bestimmt. Der Tabelle 1 ist zu entnehmen, daß das unter Zusatz des Ethylen-Propylen-Blockcopolymerisats gepfropfte Produkt (Beispiel 2) eine sehr viel höhere Haftfestigkeit besitzt als das Produkt, bei welchem das Polymerbasismaterial ausschließlich MDPE (Vergleichsversuch A) war.

**Tabelle 1**

| | Ausbeute an gepfropften Maleinsäureanhydrid (Gew.%) | Reaktionstemperatur °C | Produkt Schmelzindex 2,16 g/10 min | Haftung N/2 cm 25°C | Verbundplatte Streifenbreite 80°C |
|---|---|---|---|---|---|
| Vergleichsversuch A | 99,5 | 220 | 3,7 | 80 | 40 |
| Beispiel 2 | 99,5 | 220 | 3,5 | 140 | 100 |

### Beispiel 3

90 Gew.-Teile MDPE (Copolymeres aus Ethylen 97,5 Gew.% und Buten 2,5 Gew.%; Schmelzindex = 4,5 g/10 min.) wurden zusammen mit 10 Gew.-Teilen Novolen 2800 JX bei 140°C in einem Zweiwellenextruder, ZSK 57 von Werner & Pfleiderer, aufgeschmolzen. In die Schmelze wurden 0,2 Gew.-Teile Maleinsäureanhydrid flüssig eingepumpt, mit der Polymermischung vermischt und bei 260°C umgesetzt. Nicht umgesetztes Maleinsäureanhydrid wurde über eine Vakuumentgasung aus der Polymerschmelze entfernt.

Die mittlere Verweilzeit der Pfropfkomponenten im Extruder betrug 2 min., der Polymerdurchsatz 50 kg/h bei 150 Upm.

Die Ausbeute an gepfropftem Maleinsäureanhydrid betrug 97 Gew.%. Das gepfropfte Polymere hat eine ausgezeichnete Haftung auf polaren Substraten, wie z.B. Epoxidharzen oder Metallen und ist zudem völlig farb- und geruchlos.

### Beispiel 4 und Vergleichsversuch B

Unter den gleichen Bedingungen wie in Beispiel 3 wurde das Polymerbasismaterial gepfropft mit der Abänderung, daß anstelle des Ethylen-Propylen-Blockcopolymeren Novolen 2800 JX ein Propylenhomopolymer Novolen 1100 HX eingesetzt wurde.

Von den erhaltenen Produkten wurden 2,7 mm starke Eisen/Haftvermittler/Polyethylen-Verbundplatten gepreßt und die Schälfestigkeiten nach einem Test in Anlehnung an DIN 30 670 bestimmt. Der Tabelle 2 ist zu entnehmen, daß das unter Zusatz des Ethylen-Propylen-Blockcopolymeren gepfropfte Produkt (Beispiel 4) eine sehr viel höhere Haftfestigkeit besitzt als das Produkt, das unter Zusatz eines Propylenhomopolymeren gepfropft wurde (Vergleichsversuch B).

**Tabelle 2**

| | Ausbeute an gepfropften Maleinsäureanhydrid (Gew.%) | Reaktionstemperatur °C | Produkt Schmelzindex 2,16 g/10 min | Haftung bei 25°C Verbundplatte N/2 cm Streifenbreite |
|---|---|---|---|---|
| Vergleichsversuch B | 97 | 260 | 4,0 | 150 |
| Beispiel 4 | 97 | 260 | 4,0 | 250 |

### Beispiel 5

90 Gew.-Teile LLDPE (Copolymeres aus Ethylen 93 Gew.% und Buten 7 Gew.%; Schmelzindex = 4,5 g/10 min., Dichte = 0,920 g/cm³) wurden zusammen mit 10 Gew.-Teile Novolen 2800 JX bei 140°C in einem Zweiwellenextruder, ZSK 57 von Werner & Pfleiderer, aufgeschmolzen. In die Schmelze wurden 0,12 Gew.-Teile Maleinsäureanhydrid flüssig eingepumpt, mit der Polymermischung vermischt und bei 220°C umgesetzt. icht umgesetztes Maleinsäureanhydrid wurde über eine Vakuumentgasung aus der Polymerschmelze entfernt.

Die mittlere Verweilzeit der Pfropfkomponenten im Extruder betrug 2 min., der Polymerdurchsatz 50 kg/h bei 150 Upm.

Die Ausbeute an gepfropftem Maleinsäureanhydrid betrug 99,5 Gew.%. Das gepfropfte Polymere hat eine verbesserte Haftung auf polaren Substanzen, wie z.B. Epoxidharzen oder Metallen und ist zudem völlig farb- und geruchlos.

### Beispiel 6 und Vergleichsversuch C

Unter den gleichen Bedingungen wie in Beispiel 5 wurde das Polymerbasismaterial mit Maleinsäureanhydrid gepfropft mit der Abänderung, daß das Polymerbasismaterial zu 100 Gew.-Teilen aus LLDPE bestand.

Von den erhaltenen Produkten wurden 2,7 mm starke Eisen/Haftvermittler/Polyethylen-Verbundplatten gepreßt und die Schälfestigkeiten nach einem Test in Anlehnung an DIN 30 670 bestimmt. Der Tabelle 3 ist zu entnehmen, daß das unter Zusatz des Ethylen-Propylen-Blockcopolymeren gepfropfte Produkt (Beispiel 6) eine sehr viel höhere Haftfestigkeit besitzt als das Produkt, bei welchem das Polymerbasismaterial ausschließlich LLDPE (Vergleichsversuch C) war.

**Tabelle 3**

| | Ausbeute an gepfropften Maleinsäureanhydrid (Gew.%) | Reaktionstemperatur °C | Produkt Schmelzindex 2,16 g/10 min | Haftung Verbund-N/2 cm Streifenbreite 25 °C |
|---|---|---|---|---|
| Vergleichsversuch C | 99,5 | 220 | 4,0 | 50 |
| Beispiel 6 | 99,5 | 220 | 4,0 | 100 |

### Beispiel 7 und Vergleichsversuch D

Unter den gleichen Bedingungen wie in Beispiel 1 wurde das Polymerbasismaterial mit Maleinsäureanhydrid gepfropft mit der Abänderung, daß anstelle der 10 Gew.-Teile ®Novolen 2800 JX 10 Gew.-Teile ®DFDA 1137 (Ethylen-Buten-Copolymeres der UCC mit 87,5 Gew.% Ethylen, 12,5 Gew.% Buten und der Dichte 0,906 g/cm³) zur Modifizierung eingesetzt wurden.

Von den erhaltenen Produkten wurden 2,7 mm starke Eisen/Haftvermittler/Polyethylen-Verbundplatten gepreßt und die Schälfestigkeiten nach einem Test in Anlehnung an DIN 30 670 bestimmt. Der Tabelle 4 ist zu entnehmen, daß das unter Zusatz des Ethylen-Propylen-Blockcopolymeren gepfropfte Produkt (Beispiel 7) eine sehr viel höhere Haftfestigkeit besitzt als ein Produkt, das mit einem kautschukartigen Ethylencopolymerisat modifiziert wurde.

**Tabelle 4**

| | Ausbeute an gepfropftem Maleinsäureanhydrid (Gew.%) | Reaktionstemperatur °C | Produkt Schmelzindex 2,16 g/10 min | Haftung bei 25°C Verbundplatte N/2 cm Streifenbreite |
|---|---|---|---|---|
| Vergleichsversuch D | 99,5 | 220 | 3,8 | 30 |
| Beispiel 7 | 99,5 | 220 | 3,5 | 140 |

### Beispiel 8 und Vergleichsversuch E

Unter den gleichen Bedingungen wie in Beispiel 5 wurde die Polymermischung mit Maleinsäureanhydrid gepfropft mit der Abänderung, daß anstelle der 10 Gew.-Teile Novolen 2800 JX 10 Gew.-Teile eines LDPE-Kautschuks (quaternäres Copolymer aus Ethylen 60,05 Gew.%, n-Butylacrylat 34 Gew.%, Acrylsäure 5,3 Gew.%, Maleinsäureanhydrid 0,65 Gew.%) zur Modifizierung eingesetzt wurden.

Von den erhaltenen Produkten wurden 2,7 mm starke Eisen/Haftvermittler/Polyethylen-Verbundplatten gepreßt und die Schälfestigkeiten nach einem Test in Anlehnung an DIN 30 670 bestimmt. Der Tabelle 5 ist zu entnehmen, aß das unter Zusatz des Ethylen-Propylen-Blockcopolymeren gepfropfte Produkt (Beispiel 8) eine sehr viel höhere Haftfestigkeit besitzt als ein Produkt, das mit einem kautschukartigen Ethylencopolymerisat modifiziert wurde.

**Tabelle 5**

| | Ausbeute an gepfropftem Maleinsäureanhydrid (Gew.%) | Reaktionstemperatur °C | Produkt Schmelzindex 2,16 g/10 min | Haftung bei 25°C Verbundplatte N/2 cm Streifenbreite |
|---|---|---|---|---|
| Vergleichsversuch E | 99,5 | 220 | 4,0 | 40 |
| Beispiel 7 | 99,5 | 220 | 4,0 | 100 |

### Beispiel 9 und Vergleichsversuche F bis J

Unter den gleichen Bedingungen wie in Beispiel 3 wurde das Polymerbasismaterial mit Maleinsäureanhydrid gepfropft mit der Abänderung, daß die Gewichtsanteile des Ethylen-Propylen-Blockcopolymerisats in der Polymermischung variiert wurden: 50 Gew.-Teile (Vergleichsbeispiel F), 20 Gew.-Teile (Beispiel 9), 10 Gew.-Teile (Beispiel 10), 4,9 Gew.-Teile (Vergleichsbeispiel H), 2 Gew.-Teile (Vergleichsbeispiel I), 0 Gew.-Teile (Vergleichsbeispiel J).

Von den erhaltenen Produkten wurden 2,7 mm starke Eisen/Haftvermittler/Polyethylen-Verbundplatten gepreßt und die Schälfestigkeiten nach einem Test in Anlehnung an DIN 30 670 bestimmt. Der Tabelle 6 ist zu entnehmen, daß bei einem Zusatz von 50 Gew. -Teilen Ethylen-Propylen-Blockcopolymerisat der Verbund Eisen/Haftvermittler/Polyethylen anders als der Verbund mit einem Haftvermittler ohne Zusatz des Ethylen-Propylen-Blockcopolymerisates (Vergleichsbeispiel J) praktisch keine Haftfestigkeit mehr hat. Beträgt der Zusatz des Ethylen-Propylen-Blockcopolymerisates 2 Gew.-Teile (Vergleichsbeispiel I) bzw. 4,9 Gew.-Teile (Vergleichsbeispiel H) nimmt die Haftfestigkeit mit zunehmenden Gew.-Teilen an Ethylen-Propylen-Blockcopolymerisat zu. Überraschenderweise liegt sie bei 20 Gew. -Teilen (Beispiel 9) und 10 Gew.-Teilen (Beispiel 10) deutlich über der des Vergleichsversuches J (0 Gew.-Teile Ethylen-Propylen-Blockcopolymerisat).

**Tabelle 6**

| | Ausbeute an gepfropftem Maleinsäureanhydrid (Gew.%) | Reaktions-temperatur °C | Produkt Schmelzindex 2,16 g/10 min | Haftung bei 25°C Verbundplatte N/2 cm Streifenbreite |
|---|---|---|---|---|
| Vergleichsversuch F | 97 | 260 | 3,7 | keine Haftung |
| Beispiel 9 | 97 | 260 | 3,7 | 250 |
| Vergleichsversuch H | 97 | 260 | 3,9 | 125 |
| Vergleichsversuch I | 97 | 260 | 3,8 | 50 |
| Vergleichsversuch J | 97 | 260 | 3,9 | 150 |
| Beispiel 10 | 97 | 260 | 4,0 | 250 |

### Beispiel 10 und Vergleichsversuch K bis O

Unter den gleichen Bedingungen wie in Beispiel 9 wurde das Polymerbasismaterial mit Maleinsäureanhydrid gepfropft mit der Abänderung, daß zur Pfropfung der Polymerbasismaterialien 0,15 Gew.-Teile statt 0,2 Gew.-Teile eingesetzt wurden.

Von den erhaltenen Produkten wurden 2,7 mm starke Eisen/Haftvermittler/Polyethylen-Verbundplatten gepreßt und die Schälfestigkeiten nach einem Test in Anlehnung an DIN 30 670 bestimmt. Der Tabelle 7 ist zu entnehmen, daß bei einem Zusatz von 50 Gew.-Teilen EthylenPropylen-Blockcopolymerisat der Verbund Eisen/Haftvermittler/Polyethylen anders als der Verbund mit einem Haftvermittler ohne Zusatz des Ethylen-Propylen-Blockcopolymerisats (Vergleichsbeispiel O) praktisch keine Haftfestigkeit mehr hat. Beträgt der Zusatz des Ethylen-Propylen-Blockcopolymerisates 2 Gew.-Teile (Vergleichsbeispiel N) bzw. 4,9 Gew.-Teile (Vergleichsbeispiel M) nimmt die Haftfestigfkeit mit zunehmenden Gew.-Teilen an Ethylen-Propylen-Blockcopolymerisat zu. Überaschenderweise liegt sie bei 20 Gew.-Teilen (Beispiel 11) und 10 Gew.-Teilen (Beispiel 12) deutlich über der des Vergleichsversuches O (0 Gew.-Teile Ethylen-Propylen-Blockcopolymerisat).

**Tabelle 7**

| | Ausbeute an gepfropftem Maleinsäureanhydrid (Gew.%) | Reaktions-temperatur °C | Produkt Schmelzindex 2,16 g/10 min | Haftung bei 25°C Verbundplatte N/2 cm Streifenbreite |
|---|---|---|---|---|
| Vergleichsversuch K | 98,5 | 260 | 3,7 | keine Haftung |
| Beispiel 11 | 98,5 | 260 | 3,7 | 250 |
| Vergleichsversuch M | 98,5 | 260 | 3,9 | 80 |
| Vergleichsversuch N | 98,5 | 260 | 3,8 | 50 |
| Vergleichsversuch O | 98,5 | 260 | 3,8 | 130 |
| Beispiel 12 | 98,5 | 260 | 3,9 | 250 |

## Patentansprüche

1. Verfahren zur Herstellung von Pfropfcopolymeren durch Pfropfung von ethylenisch ungesättigten Carbonsäuren und/oder Carbonsäureanhydriden auf Mischungen von Polyolefinen, dadurch gekennzeichnet, daß auf eine Polyolefinmischung aus 51 bis 95 Gew.-Teilen eines Homo- bzw. Copolymeren des Ethylens (A) und 5 bis 49 Gew.-Teilen eines von A unterschiedlichen Ethylen-Propylen-Blockcopolymeren (B) gepfropft wird.

2. Verfahren nach Anspruch 1, dadurch gekennzeichnet, daß das Polymere (B) einen Elastomeranteil von mehr als 35 Gew.% hat, wobei der Elastomeranteil als Xylolextrakt bei 80°C bestimmt ist.

3. Verfahren nach den Ansprüchen 1 bis 2, dadurch gekennzeichnet, daß die zu pfropfende Polymermischung 5 bis 20 Gew.-Teile des Polymeren (B) enthält.

4. Verfahren nach den Ansprüchen 1 bis 3, dadurch gekennzeichnet, daß die zu pfropfende Polymermischung 8 bis 12 Gew.-Teile des Polymeren (B) enthält.

5. Verfahren nach Ansprüchen 1 bis 4, dadurch gekennzeichnet, daß das Homo- bzw. Copolymer des Ethylens (A) eine Dichte größer oder gleich 0,930 g/cm³ hat.

6. Pfropfcopolymerisate nach einem der Ansprüche 1 bis 5.

7. Verwendung der Pfropfcopolymermischungen, erhalten nach Verfahren gemäß den Ansprüchen 1 bis 5, zur Herstellung von Haftvermittlern.

8. Verwendung der Pfropfcopolymermischungen, erhalten nach Verfahren gemäß den Ansprüchen 1 bis 5, zur Herstellung von Ionomeren.

9. Verwendung von Haftvermittlern gemäß Anspruch 6 für Polyethylen/Haftvermittler/Stahl-Verbunde.

## Claims

1. A process for the preparation of a graft copolymer by grafting ethylenically unsaturated carboxylic acids and/or carboxylic anhydrides onto a blend of polyolefins, wherein grafting is carried out on a polyolefin blend of from 51 to 95 parts by weight of a homopolymer or copolymer of ethylene (A) and from 5 to 49 parts by weight of an ethylene/propylene block copolymer (B) which differs from A.

2. A process as claimed in claim 1, wherein the polymer (B) has an elastomer content of more than 35% by weight, the elastomer content being determined as a xylene extract at 80°C.

3. A process as claimed in claim 1 or 2, wherein the polymer blend to be grafted contains from 5 to 20 parts by weight of the polymer (B).

4. A process as claimed in any of claims 1 to 3, wherein the polymer blend to be grafted contains from 8 to 12 parts by weight of the polymer (B).

5. A process as claimed in any of claims 1 to 4, wherein the homopolymer or copolymer of ethylene (A) has a density greater than or equal to 0.930 g/cm³.

6. A graft copolymer as claimed in any of claims 1 to 5.

7. The use of a graft copolymer blend, obtained by a process as claimed in any of claims 1 to 5, for the production of adhesion promoters.

8. The use of a graft copolymer blend, obtained by a process as claimed in any of claims 1 to 5, for the production of ionomers.

9. The use of adhesion promoters as claimed in claim 6 for polyethylene/adhesion promoter/steel composites.

## Revendications

1. Procédé de préparation de copolymères greffés par greffage d'acides carboxyliques et/ou d'anhydrides carboxyliques à insaturation éthylénique sur des mélanges de polyoléfines, caractérisé en ce que le greffage est effectué sur un mélange de polyoléfines composé de 51 à 95 parties en poids d'un homo- ou copolymère de l'éthylène (A) et de 5 à 49 parties en poids d'un copolymère séquencé éthylène/propylène (B) différent de (A).

2. Procédé selon la revendication 1, caractérisé en ce que le polymère (B) a une teneur en élastomère de plus de 35% en poids, la part de l'élastomère étant déterminée en tant qu'extrait au xylène à 80°C.

3. Procédé selon la revendication 1 ou 2, caractérisé en ce que le mélange de polymères à greffer contient de 5 à 20 parties en poids du polymère (B).

4. Procédé selon l'une quelconque des revendications 1 à 3, caractérisé en ce que le mélange de polymères à greffer contient de 8 à 12 parties en poids du polymère (B).

5. Procédé selon l'une quelconque des revendications 1 à 4, caractérisé en ce que l'homo- ou copolymère de l'éthylène (A) a une masse volumique supérieure ou égale à 0,930 g/cm³.

6. Copolymères greffés selon l'une quelconque des revendications 1 à 5.

7. Utilisation des mélanges de copolymères greffés, obtenus par le procédé selon l'une quelconque des revendications 1 à 5, pour la préparation de produits adhésifs.

8. Utilisation des mélanges de copolymères greffés, obtenus par le procédé selon l'une quelconque des revendications 1 à 5, pour la préparation d'ionomères.

9. Utilisation de produits adhésifs selon la revendication 7 pour des matériaux composites polyéthylène/produit adhésif/acier.
